(19) Europäisches Patentamt / European Patent Office / Office européen des brevets

(11) **EP 4 786 135 A1**

(12) **EUROPEAN PATENT APPLICATION**
published in accordance with Art. 153(4) EPC

(43) Date of publication:
**05.08.2026  Bulletin 2026/32**

(21) Application number: **24872321.5**

(22) Date of filing: **25.09.2024**

(51) International Patent Classification (IPC):
**B29C 44/44** (2006.01)    **B29C 44/00** (2006.01)
**C08J 9/228** (2006.01)

(52) Cooperative Patent Classification (CPC):
**B29C 44/00; B29C 44/44; C08J 9/228**

(86) International application number:
**PCT/JP2024/034265**

(87) International publication number:
**WO 2025/070535 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023  JP 2023169279**

(71) Applicant: Sekisui Kasei Co., Ltd.
**Kita-ku**
**Osaka-shi**
**Osaka 530-8565 (JP)**

(72) Inventors:
• KUWABARA, Yusuke
  Osaka-shi, Osaka 530-8565 (JP)
• OTSUKI, Masaki
  Osaka-shi, Osaka 530-8565 (JP)

(74) Representative: **Hoffmann Eitle**
**Patent- und Rechtsanwälte PartmbB**
**Arabellastraße 30**
**81925 München (DE)**

(54) **AROMATIC POLYESTER RESIN FOAM MOLDED BODY AND METHOD FOR PRODUCING SAME**

(57)  One of the objects of the present invention is to provide an aromatic polyester-based resin foam molded body for the core of a composite structural member having a surface with no slit marks on the surface and a small maximum peak height (Sp), along with a method for producing the same.

The present invention relates to an aromatic polyester-based resin foam molded body for a core of a composite structural member,
the foam molded body containing 90% by mass or more of polyethylene terephthalate,
the foam molded body having a surface crystallinity of 20% to 30% and a peak temperature of the heat history of 125°C to 200°C, measured by a differential scanning calorimeter (DSC), the foam molded body having a surface with a maximum peak height (Sp) of 0.25 mm or less, and
foam particles constituting the foam molded body having a fusion rate of 60% or more.

[Fig. 4]

# EP 4 786 135 A1

**Description**

[Technical Field]

The present invention relates to an aromatic polyester-based resin foam molded body, and a method for producing the same.

[Background Art]

In-mold foam molded bodies are used as cores for composite structural members due to their advantages, including lightweight properties and thermal insulation. As the method for producing an in-mold foam molded body, a method of filling foam particles into a space (cavity) of a mold, heating the foam particles to cause them to foam, and thermally fusing and integrating the foam particles by the foaming pressure of the foam particles to produce a foam molded body having the desired shape (sometimes referred to as a bead foaming molding process) is used. A known method for a bead foaming molding process involves heating and foaming foam particles that have been filled into the cavity of a mold by introducing a heating medium, such as steam, into the mold cavity (steam heating). In steam heating, a mold is provided with a slit for introducing a heating medium, such as steam, into the cavity of the mold. For this reason, slit marks are formed on the surface of the resulting molded body (PTL 1).

As another method for producing an in-mold foam molded body, a method in which a molten resin raw material, into which a foaming agent is press-injected, is extruded and foamed to form a cylindrical molded body, which is then cut opened into a sheet, and the sheet is used as a core, has been reported (PTL 2).

When the foam molded body is used as a core, slit marks can prevent the core from integrating with the skin material. Depending on the type and thickness of the skin material and the composite conditions, small protrusions derived from the slit trace may be formed on the surface of the composite structural member, which can impair the surface smoothness of the composite structural member.

In the method of preparing a cylindrical molded product by extrusion foam molding and cutting the product open into a sheet, it is difficult to produce a core with a large thickness, even though slit marks are not produced, and a subsequent step of forming a sheet is required after the foam molding.

[Citation List]

[Patent Literature]

[PTL 1] Japanese Patent Application Publication No. 2014-080022
[PTL 2] Japanese Patent Application Publication No. 2016-069460

[Summary of Invention]

[Technical Problem]

The present invention has an object of providing an aromatic polyester-based resin foam molded body for the core of a composite structural member with no slit marks on the surface thereof (suitably a surface onto which a skin material is intended to be laminated, more suitably a surface onto which the skin material is intended to be laminated and which has the largest area, and still more suitably a surface onto which the skin material is intended to be laminated, which has the largest area, and which excludes the regions corresponding to the end regions in plan view), along with a method for producing the same.

The present invention has an object of providing an aromatic polyester-based resin foam molded body for the core of a composite structural member with a surface (suitably a surface onto which a skin material is intended to be laminated, more suitably a surface onto which the skin material is intended to be laminated and which has the largest area, and still more suitably a surface onto which the skin material is intended to be laminated, which has the largest area, and which excludes the regions corresponding to the end regions in plan view) with a small maximum peak height (Sp), along with a method for producing the same.

The present invention has an object of providing an aromatic polyester-based resin foam molded body for the core of a composite structural member exhibiting a high fusion rate of foam particles within a core, along with a method for producing the same.

The present invention has an object of providing a method for producing an aromatic polyester-based resin foam molded body for the core of a composite structural member capable of producing a core with a large thickness.

[Solution to Problem]

The present inventors have found that a foam molded body for a core having a surface (suitably a surface onto which a skin material is intended to be laminated, more suitably a surface onto which the skin material is intended to be laminated and which has the largest area, and still more suitably a surface onto which the skin material is intended to be laminated, which has the largest area, and which excludes the regions corresponding to the end regions in plan view) with no slits and a small maximum peak height (Sp) can be obtained, despite being a bead foaming process, by heating and foaming foam particles in a heated mold (hot-press foam molding process) without introducing steam in the molding cavity of a mold, and that the fusion rate of the form particles within the molded body thus obtained is surprisingly not low.
The invention typically encompasses the following aspects.

Item 1.

An aromatic polyester-based resin foam molded body for a core of a composite structural member,

the foam molded body containing 90% by mass or more of polyethylene terephthalate,
the foam molded body having a surface crystallinity of 20% to 30% and a peak temperature of a heat history of 125°C to 200°C, measured by a differential scanning calorimeter (DSC),
the foam molded body having a surface with a maximum peak height (Sp) of 0.25 mm or less, and
foam particles constituting the foam molded body having a fusion rate of 60% or more.

Item 2.

A composite structural member including a foam molded body as in Item 1 as a core.

Item 3.

A method for producing a foam molded body, the method producing an aromatic polyester-based resin foam molded body using a mold provided with a molding cavity for forming the foam molded body,

the mold being provided with a pair of mold parts disposed to face each other and configured to open and close the molding cavity by the pair of mold parts approaching and separating and to change a capacity of the molding cavity, the method including:

a first step of accommodating foam particles of an aromatic polyester-based resin in the molding cavity of the mold and closing the mold; and
a second step of heating the mold after the first step so as to foam and thermally fuse the foam particles accommodated in the molding cavity, thereby forming the foam molded body,
the mold having a vent hole that communicates with the molding cavity on a side surface,
gas in the molding cavity being allowed to be discharged to an outside of the mold through the vent hole of the mold during the heating in the second step,
the foam molded body containing 90% by mass or more of polyethylene terephthalate,
the foam molded body having a surface crystallinity of 20% to 30% and a peak temperature of a heat history of 125°C to 200°C, measured by a differential scanning calorimeter (DSC),
the foam molded body having a surface with a maximum peak height (Sp) of 0.25 mm or less, and
foam particles constituting the foam molded body having a fusion rate of 60% or more.

Item 4.

The method for producing a foam molded body according to Item 3, wherein the foam particles are pressed by closing the mold in the first step, and the pressed foam particles are foamed and thermally fused in the second step.

Item 5.

The foam molded body according to Item 1, which has a surface with no slit marks.

Item 6.

A composite structural member including a foam molded body as in Item 5 as a core.

Item 7.

The method for producing a foam molded body according to Item 3 or 4, wherein the foam molded body has a surface with no slit marks.

[Advantageous Effects of Invention]

The present invention can provide an aromatic polyester-based resin foam molded body for the core of a composite structural member with a surface (suitably a surface onto which a skin material is intended to be laminated, more suitably a surface onto which the skin material is intended to be laminated and which has the largest area, and still more suitably a surface onto which the skin material is intended to be laminated, which has the largest area, and which excludes the regions corresponding to the end regions in plan view) with no slit marks and a small maximum peak height (Sp), along with a method for producing the same. The use of this foam molded body as a core enables the production of a composite structural member with no unevenness due to slit marks on the surface of the skin material, even when a thin covering material is used.

The present invention provides an aromatic polyester-based resin foam molded body for the core of a composite structural member with a high fusion rate of foam particles within the core as a foam molded body obtained through a hot-press foam molding process, along with a method for producing the same. If a foam molded body with a high internal fusion rate is used as a core, the mechanical strength of the resultant composite structural member can be enhanced.

The present invention provides a method for producing an aromatic polyester-based resin foam molded body for the core of a composite structural member, which requires less energy for foaming than a method that involves heating and foaming foam particles within a mold using steam, such as a steam heating process.

[Brief Description of Drawings]

[Fig. 1]

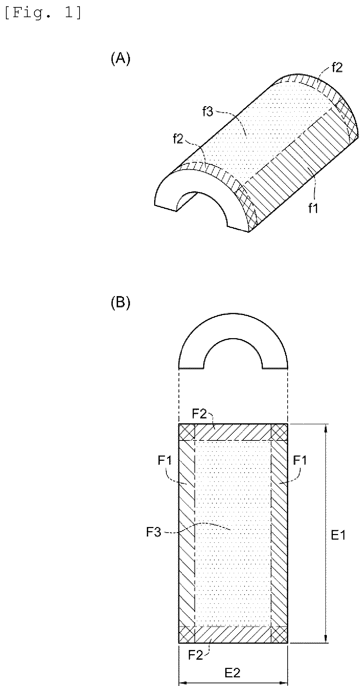

Fig. 1 is a perspective view (A), and a front view and a plan view (B) of a foam molded body for illustrating the surface on which the maximum peak height (Sp) is to be measured.
[Fig. 2]

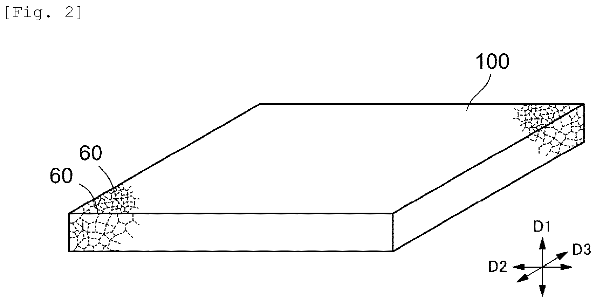

Fig. 2 is a schematic perspective view illustrating a foam molded body according to one embodiment.
[Fig. 3]

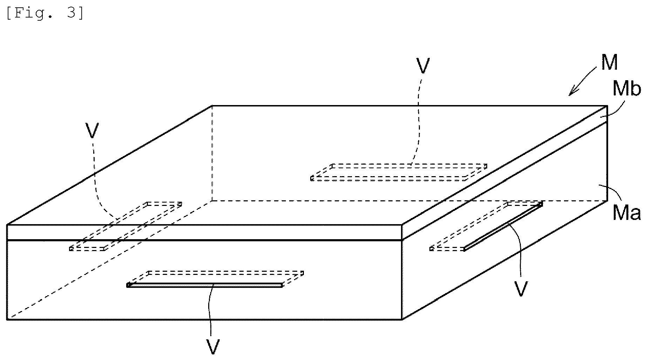

Fig. 3 is a schematic perspective view illustrating a mold used in one embodiment.
[Fig. 4]

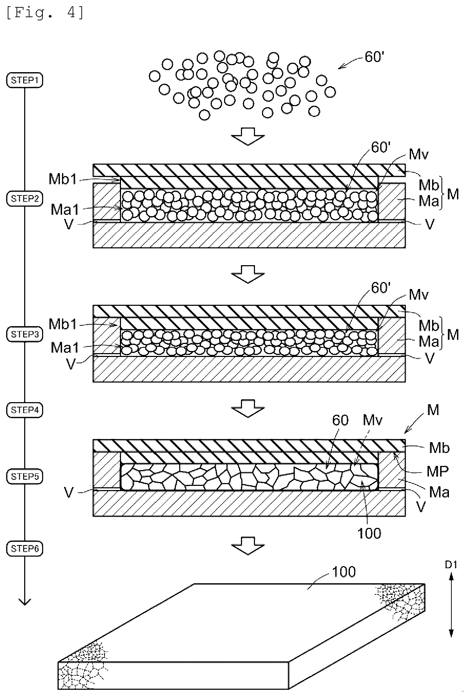

Fig. 4 is a schematic view illustrating one embodiment of a method for producing a foam molded body.
[Fig. 5]

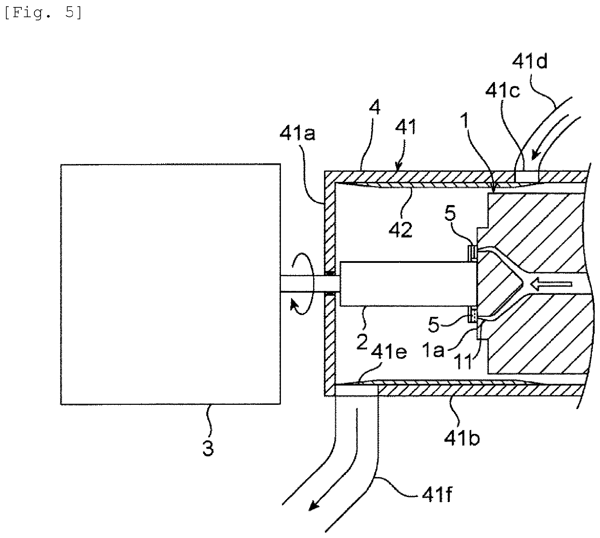

Fig. 5 is a cross-sectional view for illustrating a production apparatus used to obtain foam particles in the Examples.
[Fig. 6]

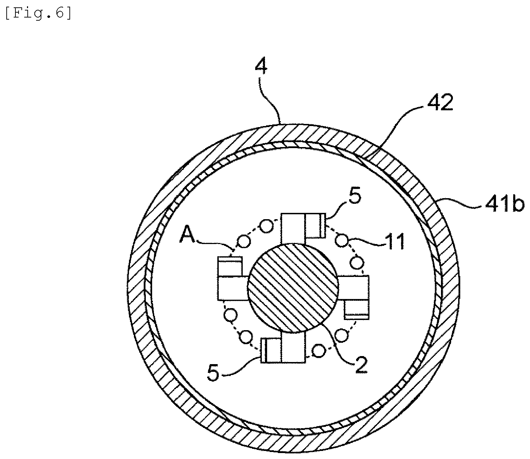

Fig. 6 is a cross-sectional view for illustrating a production apparatus used to obtain foam particles in the Examples.
[Fig. 7]

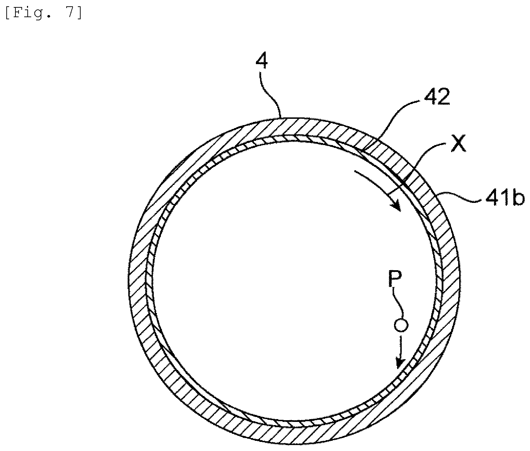

Fig. 7 is a cross-sectional view for illustrating a production apparatus used to obtain foam particles in the Examples.
[Fig. 8]

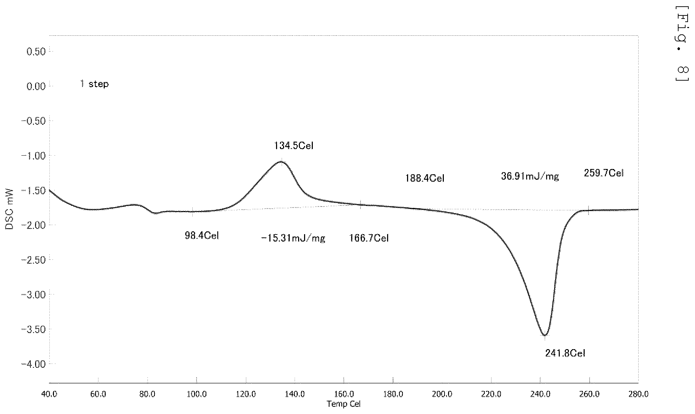

Fig. 8 is a differential scanning calorimetry (DSC) curve obtained from a surface portion sample of foam molded body prepared in Comparative Example 1 (heating temperature: 90°C).
[Fig. 9]

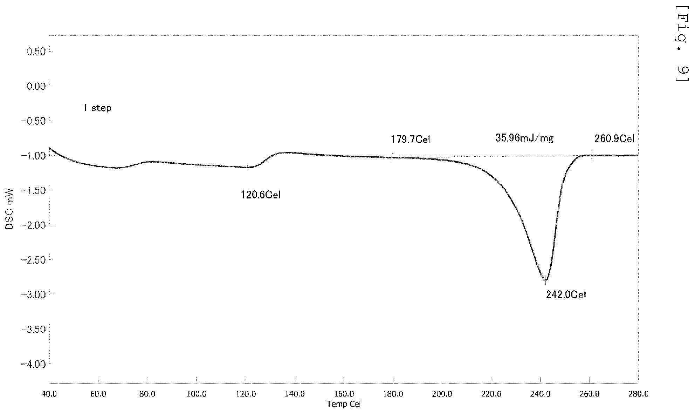

Fig. 9 is a differential scanning calorimetry (DSC) curve obtained from a surface portion sample of foam molded body prepared in Comparative Example 2 (heating temperature: 100°C).
[Fig. 10]

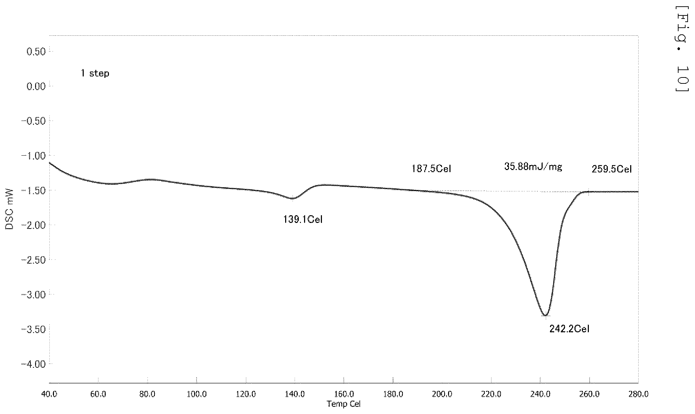

Fig. 10 is a differential scanning calorimetry (DSC) curve obtained from a surface portion sample of a foam molded body prepared in Example 1 (heating temperature: 120°C).
[Fig. 11]

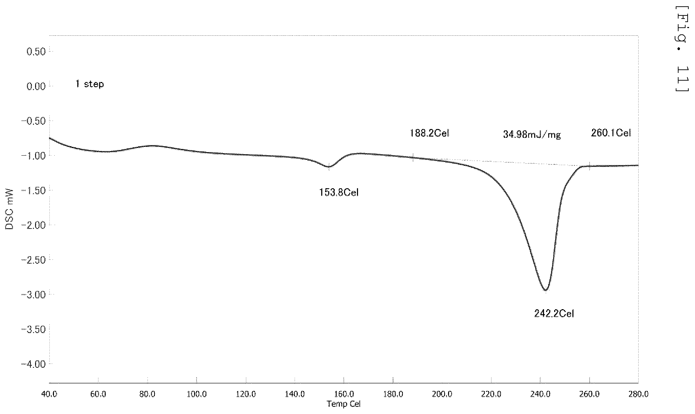

Fig. 11 is a differential scanning calorimetry (DSC) curve obtained from a surface portion sample of a foam molded body prepared in Example 2 (heating temperature: 140°C).

[Fig. 12]

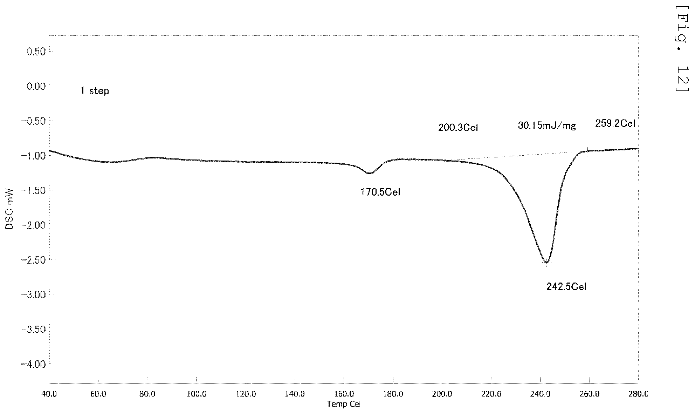

Fig. 12 is a differential scanning calorimetry (DSC) curve obtained from a surface portion sample of a foam molded body prepared in Example 3 (heating temperature: 160°C).
[Fig. 13]

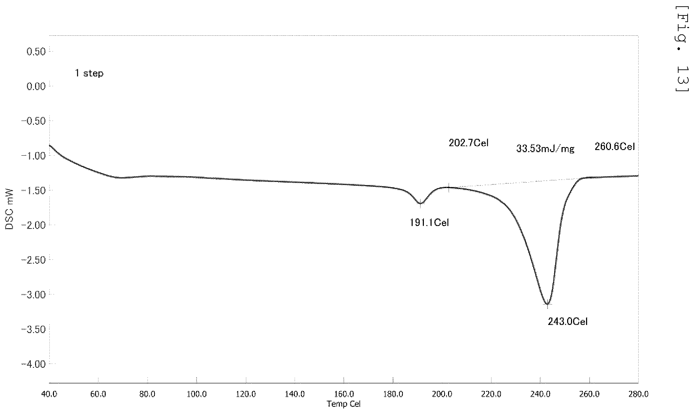

Fig. 13 is a differential scanning calorimetry (DSC) curve obtained from a surface portion sample of a foam molded body prepared in Example 4 (heating temperature: 180°C).
[Fig. 14]

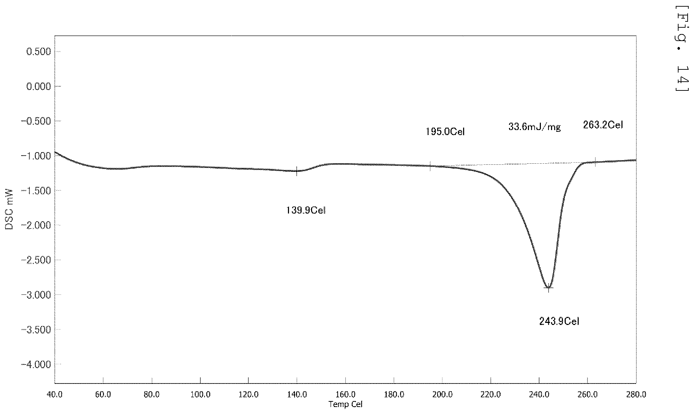

Fig. 14 is a differential scanning calorimetry (DSC) curve obtained from a surface portion sample of a foam molded body prepared in Comparative Example 4 (steam heating process, heating temperature: 120°C).
[Fig. 15]

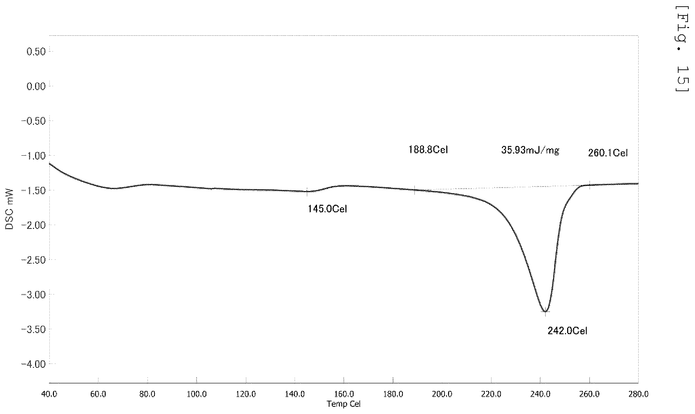

Fig. 15 is a differential scanning calorimetry (DSC) curve obtained from a surface portion sample of a foam molded body prepared in Comparative Example 5 (no vent holes, heating temperature: 120°C).

[Description of Embodiments]

The phrase "comprising", "including", or "containing" is intended to be used in the present description to encompass the phrases "consisting essentially of" and "consisting of".

Regarding the numerical ranges stated in stages in the present description, the upper or lower limit value of the numerical range in a certain stage may be combined arbitrarily with the upper or lower limit value in the numerical range of the paragraph or another stage. In addition, regarding the numerical ranges described in the present description, the upper or lower limit value of the numerical range may be replaced with a value indicated in the Examples or a value that can be uniquely derived from the Examples.

In the present specification, "to" for a numerical range means a value greater than or equal to the left numerical value and less than or equal to the right numerical value. For example, "0.5% to 10% by mass" and "0.5% by mass to 10% by mass" both mean "greater than or equal to 0.5% and less than or equal to 10% by mass". Also, with respect to numerical ranges, "or more" means "equal to or more than", and "or less" means "equal to or less than".

(Aromatic Polyester-based Resin Foam Molded Body)

The aromatic polyester-based resin foam molded body of the present invention is a fused article of aromatic polyester-based resin foam particles. More specifically, it is a molded body including a plurality of aromatic polyester-based resin foam particles that are thermally fused and integrated. The aromatic polyester-based resin foam molded body can contain an aromatic polyester-based resin in an amount of 90% by mass or more. In the present description, a molded body formed by heating and foaming foam particles in a mold is also referred to as a bead foam molded body.

(Aromatic Polyester-based Resin)

The aromatic polyester-based resin can be a polyester that includes an aromatic dicarboxylic acid component and a diol component, and examples thereof may include polyethylene terephthalate, polypropylene terephthalate, polybutylene terephthalate, polycyclohexanedimethylene terephthalate, polyethylene naphthalate, and polybutylene naphthalate, with polyethylene terephthalate being preferred. Aromatic polyester-based resins may be used alone or as a combination of two or more thereof.

The aromatic polyester-based resin may include, in addition to the aromatic dicarboxylic acid component and the diol component, polyhydric carboxylic acids having three or more carboxy groups, including tricarboxylic acids such as trimellitic acid and tetracarboxylic acids such as pyromellitic acid, as well as anhydrides thereof, and polyhydric alcohol having three or more hydroxy groups, including a triol such as glycerin and a tetraol such as pentaerythritol as constituent components.

The aromatic polyester-based resins can encompass modified aromatic polyester-based resins that have been crosslinked with a cross-linking agent. Known cross-linking agents may be used, and examples thereof may include acid dianhydrides such as pyromellitic anhydride, multifunctional epoxy compounds, an oxazoline compound, an oxazine compound, and the like. Cross-linking agents may be used alone or as a combination of two or more thereof.

If an aromatic polyester-based resin is modified by cross-linking with a cross-linking agent, it is sufficient to supply the aromatic polyester-based resin and the cross-linking agent to an extruder during the production of the aromatic polyester-based resin foam particles to cross-link the aromatic polyester-based resin with the cross-linking agent in the extruder. The amount of the cross-linking agent supplied to the extruder is preferably 0.01 to 5 parts by mass and more preferably 0.1 to 1 part by mass with respect to 100 parts by mass of the aromatic polyester-based resin, from the perspective of effectively implementing extrusion foaming.

The mass average molecular weight (Mw) of the aromatic polyester-based resin is preferably 45,000 to 100,000, and more preferably from 60,000 to 90,000, due to the excellent extrusion foamability and the excellent secondary foamability of the resulting foam particles.

When the aromatic polyester-based resin constituting the foam particles is a modified aromatic polyester-based resin, the mass average molecular weight (Mw) of the aromatic polyester-based resin means the mass average molecular weight of the modified aromatic polyester-based resin.

Next, the mass-average molecular weight (Mw) of the aromatic polyester-based resin means a polystyrene (PS)-equivalent mass-average molecular weight measured using gel permeation chromatograph (GPC).

Specifically, the mass-average molecular weight is measured as follows. To 5 mg of a sample, 0.5 mL of hexafluoroisopropanol (HFIP) and 0.5 mL of chloroform are added in this order and dissolved (immersion time: 6.0 ± 1.0 hr (complete dissolution)) to obtain a sample solution. After confirming that the sample is completely dissolved in the solution, chloroform is added to this sample solution to dilute the solution to a volume of 10 mL. The solution is then shaken and mixed. The sample solution is filtered with a non-aqueous 0.45 μm syringe filter manufactured by Shimadzu GLC Ltd., to obtain a filtrate. The filtrate is measured under the following measuring conditions using a chromatograph. The mass average molecular weight (Mw) is determined from a standard polystyrene calibration curve prepared beforehand.

Apparatus used: "HLC-8320GPC EcoSEC" gel permeation chromatograph (with built-in RI detector and UV detector) manufactured by Tosoh Corporation

(GPC Measurement Conditions)

Column

Sample side

Guard column: TSK guard column HXL-H (6.0 mm × 4.0 cm) × 1, manufactured by Tosoh Corporation
Measuring column: TSKgel GMHXL (7.8 mm I.D. × 30 cm) × 2 (arranged in series), manufactured by Tosoh Corporation Reference side
Resistance tube (inner diameter: 0.1 mm × 2 m) × 2 (arranged in series)
Column temperature = 40°C
Mobile phase = chloroform
Mobile phase flow rate
Sample side pump = 1.0 mL/min.
Reference side pump = 0.5 mL/min.
Detector: UV detector
Wavelength: 254 nm
Injection amount: 15 μL
Measurement time: 10 to 32 min.
Runtime: 20 min
Sampling pitch: 500 msec

As standard polystyrene samples for calibration curves, products named "STANDARD SM-105" and "STANDARD SH-75" manufactured by Showa Denko K.K. were used, with mass average molecular weights of 5,620,000, 3,120,000, 1,250,000, 442,000, 151,000, 53,500, 17,000, 7,660, 2,900, and 1,320.

The above standard polystyrene samples for calibration curves are grouped into a group A (5,620,000, 1,250,000, 151,000, 17,000, and 2,900) and a group B (3,120,000, 442,000, 53,500, 7,660, and 1,320), and then samples in the group A are weighed (2 mg 3 mg 4 mg, 4 mg, and 4 mg, respectively) and each dissolved in 30 mL of chloroform. Similarly, samples in the group B are weighed (3 mg, 4 mg, 4 mg, 4 mg, and 4 mg, respectively) and each dissolved in 30 mL of chloroform. The standard polystyrene calibration curve is obtained by injecting 50 μL of each of the prepared group A and group B solutions to create a calibration curve (cubic expression) based on the retention times obtained after measurement. The mass average molecular weight is calculated using the calibration curve.

The aromatic polyester-based resin foam molded body can have a surface crystallinity of 20% to 30% and a peak temperature of the heat history of 125°C to 200°C, measured by a differential scanning calorimeter (DSC).

The crystallinity of the surface of the foam molded body can range from 21% to 26%. The crystallinity of the foam molded body is determined in accordance with JIS K 7122: 1987 and JIS K 7122: 2012, and specifically, determined by a method described in the Examples.

The peak temperature of the heat history on the surface of the foam molded body is preferably within the range of 130°C to 200°C. The peak temperature of the heat history of the foam molded body is determined in accordance with the method described in the Examples.

The aromatic polyester-based resin foam can have a surface with a maximum peak height (Sp) of 0.25 mm or less. The maximum peak height (Sp) of the surface is preferably within the range of 0.01 to 0.25 mm, 0.01 to 0.20 mm, 0.01 to 0.15 mm, or 0.01 to 0.12 mm. The maximum peak height (Sp) is determined by a method using a measuring device compliant with ISO 25178, specifically, by the method described in the Examples.

The surface to be measured for the maximum peak height (Sp) is suitably a surface onto which the skin material is intended to be laminated, provided that it is a surface (also referred to as the "surface which excludes the regions corresponding to the end regions in plan view") in a region excluding, in a projection view (plan view) when the surface is placed face up, regions extending from the long sides of the projection view to a length corresponding to 10% of the average value of the lengths of the long side and short side of the projection view (value obtained by dividing the sum of the length of the long side and the length of the short side by 2) and a region extending from the short sides of the projection view to a length corresponding to 10% of the average value of the lengths of the long side and short side of the projection view, and more suitably, a surface onto which the skin material is intended to be laminated, which has the largest area, and which excludes the region corresponding to the end region in plan view.

The surface which excludes the regions corresponding to the end regions in plan view will be described with reference to Fig. 1. Fig. 1 shows a foam molded body with a specific shape, although the shape of the foam molded body is not limited thereto. Fig. 1 shows a perspective view (A) and a front view and a plan view (B) of a foam molded body. The length of long side E1 in the plan view is 20 cm, and the length of short side E2 is 10 cm. The average value of the length of the long side E1 and short side E2 is 15 cm, and 10% of the average is 1.5 cm. The region extending from the long side E1 to a length of 1.5 cm is a region F1, and the region from the short side E2 to a length of 1.5 cm is a region F2. The regions F1 and F2 are the "end regions in plan view". The region excluding the regions F1 and F2 from the plan view is a region F3 (17 cm × 7cm). The surface f3 of the foam molded body corresponding to this region F3 is the "surface which excludes the regions corresponding to the end regions in plan view". In Fig. 1, the "regions corresponding to the end regions in plan view" are regions f1 and f2 corresponding to the regions F1 and F2 on the surface.

The foam molded body of aromatic polyester-based resin is a thermally fused body composed of foam particles. The fusion rate of foam particles constituting the inside of the thermally-fused body (that is, foam particles within the foam molded body) can be 60% or higher. The fusion rate can be 60% to 90%, 60% to 85%, 70% or higher, 75% or higher, or 80% or higher. The fusion rate may be determined by counting the number of ruptures in 150 foam particles within any range at the fractured surface exposed by dividing a foam molded body of 200 mm × 200 mm × 10 mm thick into two portions, and, specifically, is determined by the method described in the Examples.

(Method for Producing Aromatic Polyester-based Resin Foam Molded Body)

In the method for producing an aromatic polyester-based resin foam molded body of the present invention, aromatic polyester-based resin-containing foam particles, which are filled into a mold, are heated through hot press molding to foam the foam particles and mold the molded body. Therefore, the method is superior to steam heating, in which the foam particles in the mold are heated and foamed by steam introduced from a slit of the mold into the mold, in that the surface of the foam molded body (suitably a surface onto which a skin material is intended to be laminated, more suitably a surface onto which the skin material is intended to be laminated and which has the largest area, and still more suitably a surface onto which the skin material is intended to be laminated, which has the largest area, and which excludes the regions corresponding to the end regions in plan view) has no slit marks, the energy required for foam molding is small, and the like.

This production method is suitable for producing the aromatic polyester-based resin foam molded body of the present invention.

One embodiment of the method for producing a foam molded body of the present invention is a method for producing a foam molded body, the method producing an aromatic polyester-based resin foam molded body using a mold provided with a molding cavity for forming the foam molded body,

the mold being provided with a pair of mold parts disposed to face each other and configured to open and close the molding cavity by the pair of mold parts approaching and separating and to change the capacity of the molding cavity, the method including:

a first step of accommodating foam particles of an aromatic polyester-based resin in the molding cavity of the mold and closing the mold; and
a second step of heating the mold after the first step so as to foam and thermally fuse the foam particles accommodated in the molding cavity, thereby forming the foam molded body.

In this production method, the gas in the molding cavity can be exhausted to the outside of the mold at foam

**EP 4 786 135 A1**

molding during heating in the second step due to a vent hole formed on the side surface of the mold.

The foam particles can be pressed by closing the mold in the first step, and the pressed foam particles can be foamed and thermally fused in the second step.

Generally, a mold constituted by a pair of two openable and closable mold parts, namely a male mold part and a female mold part, is used, and the molding cavity is formed when the mold is closed.

Hereinafter, an embodiment of a production method of the present invention will be described with reference to a case of producing a plate-shaped bead foam molded body 100 (with a length of 200 mm, a width of 200 mm, and a thickness of 10 mm) illustrated in Fig. 2 as a main example.

As illustrated in Fig. 2, the bead foam molded body 100 of the present embodiment is made by thermally fusing together a plurality of aromatic polyester-based resin foam particles 60 after foaming.

The aromatic polyester-based resin foam particles 60 and the bead foam molded body 100 of the present embodiment both contain an aromatic polyester-based resin in an amount of 90% by mass or more.

The bead foam molded body 100 of the present embodiment has a flat plate shape as illustrated in Fig. 2, and the up-down direction in Fig. 2 is also referred to as a thickness direction D1 hereinafter.

Furthermore, the left-right direction in Fig. 2 is also referred to as a width direction D2 or the like, and the depth direction in Fig. 2 is also referred to as a length direction D3 or the like hereinafter.

The bead foam molded body 100 illustrated in Fig. 2 can have a surface onto which the skin material is intended to be laminated on either or both of the top and bottom surfaces.

The bead foam molded body 100 of the present embodiment is a mold-molded article produced using a mold, and the thickness direction D1 coincides with the opening and closing direction of the mold.

The mold used in the present embodiment is provided with a pair of mold parts disposed to face each other and configured to open and close the molding cavity by the pair of mold parts approaching and separating and to change the capacity of the molding cavity.

First, a method for producing the bead foam molded body 100 will be described with reference to Figs. 3 and 4.

The aromatic polyester-based resin foam particles 60 to be filled into the mold can be prepared in accordance with a general method for producing foam particles used in a bead foaming process. For example, an aromatic polyester-based resin material containing polyethylene naphthalate and polyethylene terephthalate and an optional cross-linking agent are supplied to an extruder, melt-kneaded in the presence of a foaming agent to prepare a melt-kneaded substance, and the melt-kneaded substance is extruded and foamed to prepare an extruded foam body, and the extruded foam body is cut to prepare foam particles (also referred to as pre-foam particles).

In the production method of the present embodiment, the following steps are implemented:

STEP 1: a step of supplying an aromatic polyester-based resin material and an optional cross-linking agent to an extruder, melt-kneading the mixture in the presence of a foaming agent to prepare a melt-kneaded substance, and extruding and foaming the melt-kneaded substance to prepare an extruded foam body, and curing the extruded foam body to thereby prepare foam particles (also referred to as pre-foam particles) 60';
STEP 2: a step of preparing a mold M (Fig. 3) having a molding cavity Mv corresponding to the shape (the "plate-shape" in the present embodiment) of the bead foam molded body 100 to be produced, and vent holes V (with 1 mm height and 100 mm length) penetrating from the molding cavity Mv to the outside of the mold, and accommodating a plurality of foam particles 60' in the molding cavity Mv of the mold M;
STEP 3: a step of closing the mold M to pressurize a plurality of foam particles 60' accommodated within the molding cavity Mv by closing the mold and to compress the foam particles 60';
STEP4: a step of heating a plurality of foam particles 60' accommodated within the molding cavity Mv in a pressurized state;
STEP 5: a step of filling the molding cavity Mv with the foam particles 60 that are foamed and thermally fused by heating, thereby forming a bead foam molded body 100 having a shape corresponding to the molding cavity Mv inside the mold M; and
STEP 6: a step of cooling the mold M to cool the interior bead foam molded body 100.

As described above, the method for producing a bead foam molded body of this embodiment produces a bead foam molded body 100, in which a plurality of foam particles 60 are thermally fused, using a mold M with the molding cavity Mv and vent holes V for molding the bead foam molded body 100. Using the mold M provided with vent holes V allows gas in the molding cavity Mv to be discharged to the outside of the mold M during the foam molding process. This feature offers the advantages of eliminating slit marks on the surface of the foam molded body, reducing the maximum peak height (Sp) of that surface, and improving the fusion rate within the foam molded body.

The mold M used in the present embodiment is provided with a pair of mold parts disposed to face each other and configured to open and close the molding cavity by the pair of mold parts approaching and separating and to change the capacity of the molding cavity (Fig. 3).

8

More specifically, the mold M used in this embodiment is provided with a female mold part Ma and a male mold part Mb arranged facing each other in the up-down direction so that the mating surface MP forms a horizontal plane.

That is, the mold M of this embodiment is configured such that the up-down direction corresponds to the opening and closing direction.

The female mold part Ma is arranged below the mating surface MP, and has an accommodating recess Ma1 recessed downward from the mating surface MP and opening upward (toward the male mold part Mb) at a position corresponding to a central portion of the mating surface MP, so that the resin foam particles (foam particles 60') before heat fusion can be accommodated in the accommodating recess Ma1.

The female mold part Ma has vent holes V that penetrate the side wall thereof, allowing the gas in the molding cavity Mv to be discharged to the outside of the mold M during foam molding.

The male mold part Mb has a protruding portion Mb1 that is arranged above the mating surface MP and protrudes downward (toward the female mold part Ma) from the mating surface MP at a position corresponding to the central portion of the mating surface MP.

The cross-sectional shape of the protruding part Mb1 of the male mold part Mb on the horizontal plane is uniform from a base part (upper end side) in the protruding direction to a leading end part (lower end side), and is a quadrangular column shape in this embodiment.

The shape of the cavity formed in the accommodating recess Ma1 of the female mold part Ma is a quadrangular column shape having a uniform horizontal cross-sectional shape from the lower end to the upper end and having a longer dimension in the thickness direction D1 than that of the protruding part Mb1 of the male mold part Mb.

That is, the accommodating recess Ma1 is formed so that the recessed depth is larger than the protruding dimension of the protruding portion Mb1.

In the mold M of the present embodiment, the recessed depth of the accommodating recess Ma1 of the female mold part Ma is larger than the protruding height of the protruding portion Mb1 of the male mold part Mb. Thus, even if the protruding portion Mb1 is inserted into the accommodating recess Ma1 so that the female mold part Ma and the male mold part Mb come into contact at the mating surface MP, the leading end of the protruding portion Mb1 does not reach the bottom of the accommodating recess Ma1, and the molding cavity Mv having a rectangular parallelepiped shape (a "flat rectangular plate shape" in the present embodiment) is formed in the mold M.

That is, in the mold M of the present embodiment, the wall surface of the female mold part Ma at the bottom of the accommodating recess Ma1 and the leading end surface (lower end surface) of the protruding portion Mb1 serve as the molding surfaces that define the molding cavity Mv.

As described above, the mold M of this embodiment is configured to change the capacity of the molding cavity Mv by the pair of mold parts (female mold part Ma and male part Mb) approaching and separating.

In the method for producing a bead foam molded body of the present embodiment, which uses such a mold M, the bead foam molded body 100 is produced by implementing a first step (STEP 1-3) of accommodating a plurality of aromatic polyester-based resin foam particles (foam particles 60') constituted by the resin composition in the molding cavity Mv of the mold M and closing the mold and a second step (STEP 4-6), which is subsequent to the first step, of heating the foam particles (foam particles 60') accommodated in the molding cavity Mv to be a fusible state by the heated mold M, thereby foaming and thermally fusing the foam particles (foam particles 60').

During the heating in the second step, the gas in the molding cavity Mv is allowed to be discharged to the outside of the mold through the vent holes V of the mold M. Therefore, this method offers the advantages of eliminating slit marks on the surface of the foam molded body, reducing the maximum peak height (Sp) of that surface, and improving the fusion rate within the foam molded body.

The mold M may be in the heated state at the first step or the stage prior to the first step, or may be heated after the first step is completed.

In order to make the foam particles fusible earlier, it is preferable to carry out the first step using a mold in a state where the molding surface has been heated to a temperature equal to or higher than the glass transition temperature of the aromatic polyester-based resin.

The foam particles are not particularly limited in size and are usually formed such that the average particle diameter be 0.5 to 10 mm, still more preferably from 1.0 to 5 mm.

The average particle diameter of the foam particles refers to the diameter of a sphere that has the same volume as the average volume per foam particle. The average volume per foam particle can be determined as follows, for example.

(Way for Determining Average Volume)

A sample cup of an air comparison pycnometer is prepared, and resin foam particles of an arbitrary number N (pieces), such as approximately 50 to 100 particles, are put in this sample cup.

Foam particles used are conditioned for at least 12 hours in a space maintained at approximately 23°C and 65% RH.

Then, the total volume V (mm$^3$) of the foam particles is measured by the 1-1/2-1 atmospheric pressure method using an air comparison pycnometer.

In the air comparison pycnometer, corrections are made using standard spheres (large: 28.9 cc and small: 8.5 cc).

For example, a volumetric measurement air comparison pycnometer, which is commercially available under the trade name of "air comparison pycnometer 1000" from Tokyo-Science Co., Ltd., can be used.

Then, the average volume of the foam particles is calculated according to the following formula.

Average volume of foam particles (mm$^3$) = V/N.

The bead foam molded body 100, which is composed of the foam particles, preferably has a foaming ratio of 2 times or more. The foaming ratio is more preferably 2.5 times or more, and particularly preferably 3 times or more. The foaming ratio is preferably 50 times or less to allow the foam molded body to exhibit excellent strength. The foaming ratio may be 40 times or less, 30 times or less, or 20 times or less.

The bead foam molded body 100, which is composed of the foam particles, preferably has a bulk density of 675 g/L or lower. The bulk density is more preferably 540 g/L or lower, and particularly preferably 450 g/L or lower. The bulk density is preferably 27 g/L or higher in order to allow the foam molded body to exhibit excellent strength. The bulk density may be 34 g/L or greater, 45 g/L or greater, and 68 g/L or greater.

When the foam particles are accommodated in the molding cavity of the mold in the first step, the amount of foam particles accommodated (the volume of the foam particles, including the spaces between the foam particles (apparent volume)) may be, for example, 0.5 to 3 times, and preferably 1 to 2 times, the capacity of the molding cavity. If the amount of foam particles to be accommodated in the mold exceeds 1 times the capacity of the molding cavity, the foam particles are pressurized during accommodation. Subjecting the foam particles to a pressurized state during accommodation offers the advantages of eliminating slit marks on the surface of the foam molded body, reducing the maximum peak height (Sp) of that surface, and improving the fusion rate within the foam molded body.

In the second step, the heating temperature of the mold may be, for example, 105°C to 195°C, preferably 120°C to 180°C. A feature wherein the heating temperature falls within the above range offers the advantages of sufficiently fusing the foam particles, improving the fusion rate within the foam molded body, eliminating slit marks on the surface of the foam molded body, and reducing the maximum peak height (Sp) of that surface.

In the second step, the gas in the molding cavity can be discharged to the outside of the mold through the vent holes provided on the side surfaces of the mold. The provision of the vent holes offers the advantages of enhancing the foamability of the foam particles and improving the fusion rate within the foam molded body.

The shape and size of the opening portion (in particular, the opening portion on the molding cavity side) of the vent holes need only be such that all or some of the foam particles accommodated within the mold cavity do not enter the opening of the vent holes. The vent hole has an opening on the molding cavity side and an opening on the outside of the mold. The two openings may have the same or different shapes. The shape of the opening of the vent hole may be, for example, round, elliptical, polygonal (such as a square, pentagon, or hexagon), and the like.

The number of vent holes can be one or plural and is not particularly limited. Since the gas can be efficiently discharged from the molding cavity, the number of vent holes per each mold is preferably plural, and more preferably 2, 4, 8, 12, 16, or the like. Also, the number of vent holes per side surface of the mold can be one or plural, and if the number of the vent holes is plural, the number of vent holes can be 2, 3, 4, 5, 6, 7, 8, 9, 10, 11, 12, or the like.

It is preferable that the position of the vent holes is on the side close to the surface opposite to the surface to be pressurized among the side surfaces of the mold that form the molding cavity. For example, when the mold is pressurized from the upper side, the position of the opening of the vent hole provided on the side surface of the mold is preferably located in the vicinity of the bottom surface of the molding cavity from the standpoint of efficient exhaust (Figs. 3 and 4). The position of the vent hole opening formed on the side surface of the mold can be within the region of 20% or less, 18% or less, 16% or less, 15% or less, 13% or less, 12% or less, 11% or less, or 10% or less of the height of the side surface of the molding cavity from the bottom surface of the molding cavity (the bottom surface is a reference surface of the height; the height is 0), and can be within the region of 0% or more, 0.0001% or more, 0.001% or more, or 0.01% or more. The upper limit and the lower limit can appropriately be combined to constitute a numerical range. For example, 0.0001% and 20% can constitute the range of 0.0001% to 20%. In the case of the mold used in the Examples, the height of the side surface of the molding cavity is 10 mm, and the vent hole opening is positioned 1 mm above the bottom surface of the molding cavity. Therefore, the opening of the vent hole is positioned in an area within 10% of the height of the side surface of the molding cavity from the bottom surface.

The area of one side surface forming the molding cavity and having the vent hole (area including the vent hole opening) and the area of the opening of that vent hole (the total area of openings of all vent holes if a plurality of vent holes are present on the side surface) can be 0.5% to 8%, 0.75% to 7%, or 1% to 6% relative to the area of the side surface.

The size of the opening portion of the vent holes need only be such that all or some of the foam particles accommodated in the molding cavity do not enter the opening of the vent holes.

Regarding the size of the opening of the vent hole, if the diameter of the largest true circle (also referred to as the "largest circle diameter") that enters the opening is taken as B (mm), B can be 20% to 55%, or 25% to 50% of the average particle diameter (mm) of the foam particles, with 20% to 45% being preferred.

The largest circle diameter B can be, for example, 0.5 to 2.5 mm, and preferably 0.8 to 1.5 mm.

In the second step, the foam particles are preferably foamed and thermally fused in a state where the foam particles are pressurized. The amount of foam particles accommodated in the second step (the volume of the foam particles, including the spaces between the foam particles (apparent volume)) may be, for example, 0.5 to 3 times, and preferably 1 to 2 times, the capacity of the molding cavity. If the volume is larger than 1 times the capacity of the molding cavity, the foam particles are put in a state of being pressurized upon heating. Foaming and thermal fusing in a state where foam particles are pressurized in the second step offers the advantages of eliminating slit marks on the surface of the foam molded body, reducing the maximum peak height (Sp) of that surface, and improving the fusion rate within the foam molded body.

Since steam heating directly heats the foam particles by introducing a heating medium, such as water vapor, into a molding cavity, even the foam particles within the molding cavity can be sufficiently heated, resulting in a high fusion rate within the bead foam molded body. On the contrary, heat pressing is generally able to sufficiently heat foam particles in contact with the mold through the heat from the heated mold, but the heat transfer to the foam particles within the molding cavity is relatively small. Thus, thermal pressing has been disadvantageous for heating the foam particles within the molding cavity. Surprisingly, however, the internal fusion rate of the bead foam molded body obtained by the production method of the present invention using aromatic polyester-based resin foam particles was 60% or higher, showing high values for a bead foam molded body produced by hot pressing (Examples 1 to 4).

(Composite Structural Member)

The composite structural member of the present invention includes a foam molded body as a core. For example, the composite structural member of the present invention is formed by laminating and integrating a skin material onto the surface of the foam molded body of the present invention.

The skin material is mainly used for protecting the surface of a foam molded body or obtaining better properties that cannot be obtained from a foam molded body alone. For example, using a skin material can further enhance heat resistance and mechanical strength. The skin material may be laminated over the entire surface of the foam molded body or a portion of the surface.

Examples of skin materials may include a fiber-reinforcing material, a metal sheet, a resin film, and the like. Among them, a fiber-reinforcing material is preferable.

Fibers constituting the fiber-reinforcing material are not particularly limited, and examples thereof may be a carbon fiber, a glass fiber, an aramid fiber, a boron fiber, a metal fiber, and the like. A carbon fiber, a glass fiber, and an aramid fiber are preferred, with a carbon fiber being more preferred due to the excellent heat resistance and mechanical strength thereof. The fiber reinforcement material may be impregnated with a thermosetting resin or thermoplastic resin. In other words, the skin material may be a prepreg.

The thermosetting resin is not particularly limited, and examples thereof may be an epoxy resin, an unsaturated polyester resin, a phenolic resin, a melamine resin, a polyurethane resin, a silicone resin, a maleimide resin, a vinyl ester resin, a cyanate ester resin, a resin obtained by pre-polymerizing a maleimide resin and a cyanate ester resin, and the like. An epoxy resin or a vinyl ester resin is preferred due to the excellent heat resistance, elastic modulus, and chemical resistance thereof. Thermosetting resins may be used alone or as a combination of two or more thereof.

Thermoplastic resins are not particularly limited, and examples thereof may include a polyolefin-based resin, a polyester-based resin, a thermoplastic epoxy resin, a polyamide-based resin, a thermoplastic polyurethane resin, a sulfide-based resin, and an acrylic-based resin. A polyester resin and a thermoplastic epoxy resin are preferable due to excellent adhesiveness between the skin material and the foam molded body or excellent adhesiveness between the fibers constituting the fiber-reinforcing material. Thermoplastic resins may be used alone or as a combination of two or more thereof.

Metal sheets are not particularly limited, and examples thereof may include an aluminum sheet, a stainless sheet, an iron sheet, a steel sheet, and a titanium sheet. An aluminum sheet is preferred due to the excellent lightweight and mechanical strength thereof. It should be noted that the aluminum sheet also includes an aluminum alloy sheet containing 50% by mass or more of aluminum.

The resin film is not particularly limited, and examples thereof may include a polyolefin-based resin film, a polyester-based resin film, and an acrylic resin-based film. Examples of the polyolefin-based resin film may include a polyethylene-based resin film, a polypropylene resin film, and the like. Examples of the polyester-based resin film may include a polyethylene terephthalate film.

The skin material is preferably laminated and integrated with the foam molded body. Methods for laminating and integrating the skin material on the surface of a foam molded body are not particularly limited, and examples thereof may include (1) a method of laminating and integrating the skin material on the surface of a foam molded body via an adhesive;

(2) a method of laminating a skin material (suitably fiber-reinforcing material) impregnated with a thermoplastic resin on the surface of the foam molded body to laminate and integrate the skin material on the surface of the foam molded body via the thermoplastic resin impregnated in the skin material serving as a binder; (3) a method of laminating a skin material (suitably fiber-reinforcing material) impregnated with an uncured thermosetting resin, then curing the thermosetting resin impregnated in the skin material as a binder to laminate and integrate the skin material on the surface of the foam molded body; (4) a method of placing a skin material heated to be a soften state on the surface of a foam molded body and pressing the skin material against the surface of the foam molded body to laminate and integrate the skin material on the surface of the foam molded body while optionally deforming the skin material along the surface of the foam molded body; and (5) other methods generally applied for molding fiber reinforced resin sheets. For example, autoclave methods, hand layup methods, spray-up methods, PCM (Prepreg Compression Molding) methods, RTM (Resin Transfer Molding) methods, VaRTM (Vacuum assisted Resin Transfer Molding) methods, and other similar methods may be mentioned. From the perspective of improving the adhesiveness between the skin material and the foam molded body, as well as enhancing the adhesiveness between the fibers constituting the fiber-reinforcing material, autoclave methods, RTM methods, and VaRTM methods are preferable.

In addition to lightweight properties, soundproofing properties, heat insulating properties, vibration damping properties, and the like, which are inherent to a foam molded body, a composite structural member additionally has various functions (heat resistance, wear resistance, abrasion resistance, aesthetic appearance, chemical resistance, water resistance, oil resistance, fouling resistance, etc.) due to the integration with a skin material. Thus, the composite structural member can be used in the construction sector, transportation equipment (automobiles, motorcycles, buses, trains, aircraft, ships, etc.) sector, aerospace sector, energy technology sector (for example, wind turbine rotors), sports (various athletic equipment, etc.) sector, electrical industry sector, electronics industry sector, and the like, in addition to the applications in which aromatic polyester-based resin foam molded bodies have been conventionally used. For example, aircraft equipment structures (such as helicopter blades), interior and exterior materials of various vehicles, materials for sporting goods, materials for leisure goods, sandwich structural materials, blades for wind power generation, and the like may be mentioned. Examples of automotive components may include a door panel, a door inner, a bumper, a fender, a fender support, an engine cover, a roof panel, a trunk lid, a floor panel, an instrument panel, a center cluster, a center tunnel, a crash box, and the like. For example, when a composite structural member is used in a door panel that has been conventionally made of a steel plate, a door panel having a substantially equivalent rigidity to that of a steel plate door panel achieves significant weight reduction while improving thermal insulation, soundproofing, and other properties.

[Examples]

Hereinafter, an embodiment of the present invention will be described in more detail with reference to the Examples and the like, but the present invention is not limited thereto. The methods for specifying various physical properties in the Examples and the like are described below. The surface of a foam molded body as an object for measurement in the Examples and the like refers to the upper surface (the surface that is in contact with the male mold part during the production process) of a foam molded body. Thus, the surface properties of foam molded bodies measured in the Examples and the like are properties of the upper surface of the foam molded bodies.

(Average Particle Diameter of Foam Particles)

The average particle diameter of the foam particles was measured by the following method. First, several types of sieves with different apertures as stipulated in JIS (aperture 6.70 mm, aperture 5.60 mm, aperture 4.75 mm, aperture 4.00 mm, aperture 3.35 mm, aperture 2.80 mm, aperture 2.36 mm, aperture 2.00 mm, aperture 1.70 mm, aperture 1.40 mm, aperture 1.18 mm, aperture 1.00 mm, aperture 0.850 mm, aperture 0.710 mm, aperture 0.600 mm, and aperture 0.500 mm) were prepared, and 50 g of the foam particles were sieved in order from a sieve with the largest aperture to a sieve with the smallest aperture. As a result, the foam particles could not pass through a sieve with an aperture of a predetermined size according to the particle diameter of each particle, and remained on each sieve. The average particle diameter of the foam particles remaining on each sieve was set as listed in the following Table on the basis of the aperture size of the sieve. For example, the particle diameter of the foam particles remaining on the 1.70 mm sieve was assumed to be 1.85 mm.

[Table 1]

| Sieve aperture (mm) | 6.70 | 5.60 | 4.75 | 4.00 | 3.35 | 2.80 | 2.36 | 2.00 |
|---|---|---|---|---|---|---|---|---|
| Average particle diameter of foam particles (mm) | 7.35 | 6.15 | 5.175 | 4.375 | 3.675 | 3.075 | 2.58 | 2.18 |
| Sieve aperture (mm) | 1.70 | 1.40 | 1.18 | 1.00 | 0.850 | 0.710 | 0.600 | 0.500 |
| Average particle diameter of foam particles (mm) | 1.85 | 1.55 | 1.29 | 1.09 | 0.925 | 0.780 | 0.655 | 0.550 |

(Bulk Density of Foam Particles)

Foam particles of approximately 1000 cm$^3$ were prepared, and the foam particles were filled into a graduated cylinder up to the scale of 1000 cm$^3$ (1 L).

The graduated cylinder was visually observed from the horizontal direction, and if even at least one foam particle reached the scale of 1000 cm$^3$, filling the graduated cylinder with the foam particles was finished at that time.

Next, the mass of the foam particles filled into the graduated cylinder was weighed out to two significant figures after the decimal point, and the mass was taken as W (g).

Then, the bulk density of the foam particles was calculated from the following equation.

$$\texttt{Bulk density (g/L) = W.}$$

(Apparent Volume of Foam Particles)

A graduated cylinder capable of measuring 1000 cm$^3$ (1 L) was prepared, and the foam particles were filled into the graduated cylinder. The graduated cylinder was visually observed from the horizontal direction, and the scale at which even at least one foam particle was reached was assumed to be the apparent volume (cm$^3$) of the foam particles.

(Density of Foam Molded Body)

The mass (a) and volume (b) of a foam molded body (which had been dried at 25°C for 20 hours or longer after molding) were measured to at least three significant figures, respectively, and the density (g/L) of the foam molded body was calculated from the formula (a)/(b).

(Fusion Rate within Foam Molded Body)

After a cut-in line having a depth of approximately 2 mm was made on the upper surface of the molded foam molded body using a cutter knife, the molded foam molded body was divided into two pieces along the cut-in line to expose a ruptured surface. An arbitrary range containing 150 foam particles on the ruptured surface was set, then 150 foam particles included in that range were observed, the number (a) of foam particles ruptured within the foam particles and the number (b) of foam particles ruptured at the interface between the foam particles were counted, and the value obtained by substituting the numbers (a) and (b) into the formula [(a)/((a)+(b))] $\times$ 100 was assumed to be the fusion rate (%). The foam molded body used for measuring the fusion rate was essentially a flat plate with a thickness of approximately 10 mm, a width of approximately 200 mm, and a length of approximately 200 mm. The cut-in line was formed so as to cross the central longitudinal portion of the foam molded body in the width direction. If the number of foam particles observed at a ruptured surface is less than 150, all foam particles in all foam particles on a ruptured surface are observed, the number (a) of foam particles ruptured within the foam particles and the number (b) of foam particles ruptured at the interface between the foam particles are counted, and the fusion rate can be calculated by substituting the numbers (a) and (b) into the above formula.

(Maximum Peak Height (Sp) of Surface of Foam Molded Body)

The maximum peak height (Sp) of the surface of the foam molded body was measured using a measuring device compliant with ISO 25178 (VR-3200 manufactured by Keyence Corporation).

The details of the measuring method are given below.

[Sample]

The surface of the foam molded body to be measured is cut to a size of 5 cm $\times$ 6 cm and then adhered to a flat metal plate using a double-sided tape. The surface of the object to be measured was the surface that had the widest area, was in contact with the male mold during foam molding, and constituted the object to be measured for the maximum peak height (Sp) mentioned above.

[Measurement Conditions]

Magnification: 12 times
Measurement condition: expert
Measurement mode: superfine
Measurement direction: both sides
Brightness adjustment for measurement: Auto (80)
Missing measurement point and saturation point indication: ON

[Analysis]

Using the images captured, the following analysis was carried out.
Analysis was performed using analysis application of Keyence Corporation.

[Analysis Conditions]

Image processing: After performing surface condition correction on the entire region
Filter settings: no cut-off
End effect Correction: no check

Analysis of the surface roughness was performed in the entire region to determine the maximum peak height (Sp).
The number of measurements was set to 3, and the average value was calculated.

(DSC Measurement)

Samples were obtained by thinly slicing the foam molded body in a range within a thickness of 2 mm from the surface of the foam molded body using a cutter knife. The sample ($5.5 \pm 0.5$ mg) was filled without gaps on the bottom of the aluminum measurement container, and the container was closed with an aluminum lid. Next, differential scanning calorimetry was carried out using a differential scanning calorimeter "DSC 7000X, AS-3" manufactured by Hitachi High-Tech Science Co., Ltd. Under the nitrogen gas flow rate of 20 mL/min, the sample was heated according to the following steps to obtain a DSC curve. Alumina was used as a reference material.

(Step 1) The temperature was held at 30°C for 2 minutes.
(Step 2) The temperature was raised from 30°C to 290°C at a rate of 10°C/min.

(Crystallization Temperature and Melting Temperature)

The crystallization temperature and melting temperature of the surface of the foam molded body were determined from the DSC curve obtained during the DSC measurement.
Using the analysis software attached to the differential scanning calorimeter, the temperatures at the top of the crystallization peak and melting peak observed in the heating process were read from the DSC curve and set as the crystallization temperature and melting temperature (melting point), respectively.

(Crystallinity)

Crystallinity was measured in accordance with a method stipulated in JIS K 7122: 1987 and JIS K 7122: 2012.
From the DSC curve obtained in the DSC measurement, the area of the melting peak, a heat of fusion C1 (J/g) determined from the area of the melting peak, the area of the crystallization peak, and heat of crystallization C2 (J/g) determined from this area were identified using the analysis software attached to the differential scanning calorimeter. The heat of fusion was subtracted from the heat of crystallization to determine the difference. The crystallinity was determined by dividing this difference by 140.1 J/g, which is the theoretical heat of fusion of polyethylene terephthalate perfect crystals.
Specifically, the heat of fusion was calculated from the portion surrounded by the DSC curve and a straight line connecting the point at which the DSC curve deviates from the baseline on the low-temperature side and the point at which the DSC curve returns to the baseline on the high-temperature side. The heat of crystallization was calculated from the area of the portion surrounded by the DSC curve and a straight line connecting the point at which the DSC curve deviates from the baseline on the low-temperature side and the point at which the DSC curve returns to the baseline on the high-temperature side.

In other words, the degree of crystallinity was obtained from the following equation.

$$\texttt{Crystallinity (\%) = ((C1-C2)/140.1) × 100}$$

(Peak Temperature of Heat History)

The peak temperature of the heat history was identified from the DSC curves obtained in the above DSC measurement.

Using the analysis software attached to the differential scanning calorimeter, the peak temperature of the endothermic peak, located on the lower temperature side than the melting temperature, was identified and assumed to be the peak temperature of the heat history.

Example 1

(1) Preparation of Foam Particles

Foam particles were prepared by the following procedure using the production apparatus illustrated in Figs. 5 to 7.

An aromatic polyester-based resin composition was obtained by mixing 100 parts by mass of an aromatic polyester-based resin material containing 95% by mass of plant-derived polyethylene terephthalate (intrinsic viscosity: 0.80, density: 1400 kg/m$^3$, melting point: 247.2°C, glass transition temperature: 78.7°C, mass average molecular weight: 74,000, proportion of plant-derived components: 30%) and 5% by mass of polyethylene naphthalate (intrinsic viscosity: 0.50, density: 1330 kg/m$^3$, MP: 264.2°C, a glass transition temperature: 119.8°C), 1.8 parts by mass of a master batch containing polyethylene terephthalate and talc (polyethylene terephthalate content: 60% by mass, talc content: 40% by mass, intrinsic viscosity of polyethylene terephthalate: 0.82), and 0.25 parts by mass of pyromellitic anhydride.

The resulting aromatic polyester-based resin composition was supplied into a single screw extruder with a bore diameter of 65 mm and an L/D ratio of 35, and was melt-kneaded at 290°C. Kneading time was 15 minutes.

Subsequently, butane (containing 35% by mass of isobutane and 65% by mass of n-butane) as a foaming agent was introduced into an extruder so as to pressurizedly inject the foaming agent into the molten aromatic polyester-based resin composition and uniformly disperse the foaming agent in the aromatic polyester-based resin composition. In this case, the amount of butane added was set to 1.2 parts by mass with respect to 100 parts by mass of the aromatic polyester-based resin material.

Thereafter, at the front end of the extruder, the molten aromatic polyester-based resin composition was cooled to 270°C. Then, the aromatic polyester-based resin composition was extruded and foamed from each nozzle of a multi-nozzle mold 1 mounted to the front end of the extruder. The extrusion amount of the aromatic polyester-based resin composition was set to 38 kg/hr.

The multi-nozzle mold 1 was provided with 50 nozzles with a diameter at the outlet portion 11 of 0.8 mm, wherein all the outlet portions 11 of the nozzles were disposed at equal intervals on an imaginary circle A with a diameter of 139.5 mm assumed to be on a front end surface 1a of the multi-nozzle mold 1.

Two rotary blades 5 are integrally formed on the outer peripheral surface of the rear end of the rotary shaft 2 with a phase difference of 180° in the circumferential direction of the rotary shaft 2. Each rotary blade 5 was configured to move on the imaginary circle A while always being in contact with the front end surface 1a of the multi-nozzle mold 1. The rotary shaft 2 penetrated a front portion 41a of a cooling drum 41, which constituted a cooling member 4, and was connected to a driving member 3 serving as a motor.

The cooling member 4 included a cooling drum 41. The cooling drum 41 had a front portion 41a with a front circular shape, and a cylindrical peripheral wall portion 41b extending rearward from the outer peripheral edge of the front portion 41a, with an inner diameter of 320 mm. The cooling water 42 at 30°C was supplied into the cooling drum 41 through a supply pipe 41d and a supply port 41c of the cooling drum 41. The capacity of the cooling drum 41 was 17684 cm$^3$.

The cooling water 42 was advancing forward so as to form a helix along the inner peripheral surface of the peripheral wall portion 41b of the cooling drum 41 by the centrifugal force caused by the flow velocity when the water was supplied from the supply pipe 41d to the inner peripheral surface of the peripheral wall portion 41b of the cooling drum 41. The cooling water 42 gradually spread in a direction orthogonal to the traveling direction, as the cooling water 42 progressed along the inner peripheral surface of the peripheral wall portion 41b. As a result, the inner peripheral surface of the peripheral wall portion 41b located forward of the supply port 41c of the cooling drum 41 was entirely covered with the cooling water 42. In Fig. 7, the cooling water 42 flows in the direction indicated by the arrow X.

While a rotary blade 5 disposed on a front end surface 1a of the multi-nozzle mold 1 was rotated at a rotational speed of 2500 rpm, an extrudate (foam molded body) of an aromatic polyester-based resin extruded from the outlet portion 11 of the respective nozzles of the multi-nozzle mold 1 and foamed was cut by the rotary blade 5 to produce substantially spherical particulate cut pieces.

The extrudate of the aromatic polyester-based resin was composed of a non-foamed portion immediately after being extruded from the nozzle of the multi-nozzle mold 1 and a foamed portion in the process of foaming, continuous with this non-foamed portion. Further, the extrudate of the aromatic polyester-based resin was cut at the open end of the outlet portion 11 of the nozzle, and the extrudate of the aromatic polyester-based resin was cut at the non-foamed portion.

During the production of the foam particles, the rotary shaft 2 was not initially attached to the multi-nozzle mold 1, and the cooling member 4 was removed from the multi-nozzle mold 1. In this state, the extrudate of the aromatic polyester-based resin was extruded and foamed from an extruder, and it was confirmed that the extrudate of the aromatic polyester-based resin was composed of a non-foamed portion immediately after being extruded from the nozzle of the multi-nozzle mold 1 and a foamed portion in the process of foaming, continuous with this non-foamed portion. After this confirmation, the rotary shaft 2 was attached to the multi-nozzle mold 1 and the cooling member 4 as disposed at a predetermined position, and then the rotary shaft 2 was rotated to supply the extrudate of the aromatic polyester-based resin, and the extrudate was cut at the open end of the outlet portion 11 of the nozzle by a rotary blade 5 to produce particulate cut pieces.

The resulting particulate cut pieces were thrown outward or forward by the cutting stress caused by the rotary blade 5. The blown-out granular cut collided obliquely with the surface of the cooling water 42 flowing along the inner surface of the cooling drum 41 of the cooling member 4 from the upstream side to the downstream side of the flow of the cooling water 42 so as to follow the cooling water 42, and the particulate cut pieces entered the cooling water 42 and immediately cooled.

The particulate cut pieces were discharged together with the cooling water 42 through the discharge port 41e of the cooling drum 41, and then separated from the cooling water 42 by a dehydrator. Foam particles (aromatic polyester-based resin foam particles) were produced in this way.

(2) Preparation of Foam Molded Body

Foam molded bodies were prepared according to the following procedure.

Foam molding was carried out in a heating compressor equipped with a mold (Figs. 3 and 4) having a straight platelike molding cavity with a length of 200 mm, a width of 200 mm, and a depth of 10 mm (capacity Vmin: 400 cm$^3$) and vent holes (with a height of 1 mm and a length of 100 mm) formed on the side wall thereof. One vent hole was provided in each side wall, and the gas in the molding cavity was allowed to be exhausted to the outside of the mold.

The mold was heated to a set temperature of 120°C, and 60 g of the foam particles (with an average particle diameter of 2.5 mm and a bulk density of 150 g/L) were filled into the mold.

The mold was closed by a hydraulic compression mechanism and heated for 15 minutes.

After heating, the mold was cooled immediately for 5 minutes so that the mold temperature was 60°C or lower.

After cooling, a molded bead body was removed from the mold.

It should be noted that the apparent volume of 60 g of foam particles (volume including the space between the particles) was approximately 429 cm$^3$. For this reason, molding in which pressure was applied in the opening and closing direction of the mold at a compression ratio of approximately 7% was carried out in this case.

Examples 2 to 4 and Comparative Examples 1 and 2

A foam molded body was obtained in the same manner as in Example 1, except that the heating temperature of the mold was changed to the temperature listed in Table 1 in the foam molded body preparation process.

Comparative Example 3

A foam molded body was prepared in the same manner as in Example 1, except that the heating temperature of the mold was changed to the temperature listed in Table 1 in the foam molded body preparation process. As a result, the molded body significantly shrank, rendering it unable to provide a foam molded body with a shape corresponding to the shape of the mold.

Comparative Example 4

A foam molded body was obtained in the same manner as in Example 1, except that a foam molded body was obtained by the following steam heating in the foam molded body preparation process.

(2) Preparation of Foam Molded Body

Foam molded bodies were prepared according to the following procedure.

An inter-mold foaming molding machine equipped with a mold, which included a male mold part and a female mold part, was prepared. A rectangular parallelepiped molding cavity having an internal dimension of 200 mm length × 200 mm width × 10 mm height was formed between the male and female mold parts in a state where the male mold and the female mold parts were clamped.

In order to supply heating steam to the foam particles within the molding cavity from the outside of the mold through the mold, the mold had a total of 252 circular supply ports with a diameter of 8 mm, spaced at 20 mm intervals. Each supply port was provided with a lattice portion (slit; lattice width was 1 mm) over the entire surface thereof to prevent the foaming particles filled into the mold from flowing out of the mold through the supply port. The mold was so configured that steam can be smoothly supplied from the outside of the mold into the molding cavity through a supply port of the mold.

In the same manner as in Example 1, foam particles were filled into the molding cavity of a mold. Steam at 120°C was supplied into the molding cavity, and the foam particles were heated and foamed, allowing the secondary foam particles to be integrated through heat fusion. Then, cooling water was supplied into the molding cavity to cool the foam molded body in the molding cavity, and the mold was opened to remove the foam molded body.

Comparative Example 5

A foam molded body was obtained in the same manner as in Example 1, except that a mold with no vent holes was used in the foam molded body preparation process. The mold used here was the same as the mold used in Example 1, except that the mold had no vent holes.

Foam molded bodies obtained in the Examples and Comparative Examples were subjected to various tests. An overview of the Examples and Comparative Examples, along with the results of the tests thereof, is listed in Table 2.

[Table 2]

| | | | | Comparative example | | Example | | | | Comparative example | | |
|---|---|---|---|---|---|---|---|---|---|---|---|---|
| | | | | 1 | 2 | 1 | 2 | 3 | 4 | 3 | 4 | 5 |
| Foam particles | | Bulk density | g/L | 150 | 150 | 150 | 150 | 150 | 150 | 150 | 150 | 150 |
| | | PET | wt% | 95 | 95 | 95 | 95 | 95 | 95 | 95 | 95 | 95 |
| | | PEN | wt% | 5 | 5 | 5 | 5 | 5 | 5 | 5 | 5 | 5 |
| | | Foaming agent | - | Butane | Butane | Butane | Butane | Butane | Butane | Butane | Butane | Butane |
| Molding condition | | Heating method | - | Hot pressing | Hot pressing | Hot pressing | Hot pressing | Hot pressing | Hot pressing | Hot pressing | Steam | Hot pressing |
| | | Presence of vent holes | - | Formed | Formed | Formed | Formed | Formed | Formed | Formed | Steam supply port is formed | Not formed |
| | | Heating temperature | °C | 90 | 100 | 120 | 140 | 160 | 180 | 200 | 120 | 120 |
| | | Heating time | min | 15 | 15 | 15 | 15 | 15 | 15 | 15 | 60 | 60 |
| | | Cooling time | min | 5 | 5 | 5 | 5 | 5 | 5 | 5 | 2 | 2 |
| Foam molded body | | Density | g/L | 150 | 150 | 150 | 150 | 150 | 150 | Shrank | 150 | 150 |
| | | Internal fusion rate | % | 0 | 18 | 63 | 78 | 80 | 81 | | 84 | 39 |
| | | Surface maximum peak height (Sp) | mm | 0.29 | 0.16 | 0.08 | 0.07 | 0.10 | 0.10 | | 0.35 | 0.28 |
| | Themal characteristics on the surface | Melting temperature | °C | 241.8 | 242.0 | 242.2 | 242.2 | 242.5 | 243.0 | | 243.9 | 242.0 |
| | | Crystallization temperature | °C | 134.5 | - | - | - | - | - | | - | - |
| | | Crystallinity | % | 15.4 | 25.7 | 25.6 | 25.0 | 21.5 | 23.9 | | 24.0 | 25.6 |
| | | Heat history peak temperature | °C | Unmeasurable | 120.6 | 139.1 | 153.8 | 170.5 | 191.1 | | 139.9 | 145.0 |

The fusion rates within the foam molded bodies of Examples 1 to 4 were 60% or more, which were higher than those of the foam molded bodies of Comparative Examples 1, 2, and 5. The maximum peak heights (Sp) of the surface of the foam molded bodies of Examples 1 to 4 were lower than those of the foam molded bodies of Comparative Examples 1, 4, and 5. It should be noted that no slit marks were observed in the foam molded bodies of Examples 1 to 4, and slit marks were observed on all surfaces of the foam molded body of Comparative Example 4.

The foam molded bodies of Examples 1 to 4 had surface crystallinity within the range of 20% to 30% and peak temperatures of the heat history within the range of 125°C to 200°C. On the contrary, either or both of the surface crystallinity and peak temperatures of the heat history of the foam molded bodies of Comparative Examples 1, 2, 4, and 5 fell outside the above ranges. Due to the crystallinity of the surface of the foam molded body within the range of 20% to 30% and the peak temperature of the heat history within the range of 125°C to 200°C, the interior fusion rate was high, and the Sp was low.

[Reference Signs List]

E1 Long side
E2 Short side
F1 Region from a long side to a length corresponding to 10% of the average between the lengths of long and short sides (value obtained by dividing the sum of the length of a long side and the length of a short side by 2)
F2 Region from the short side to a length corresponding to 10% of the average between the lengths of the long side and short side
F3 Region excluding the region corresponding to the edge of the plan view
f1 Region corresponding to the plan view region F1
f2 Region corresponding to the plan view region F2
f3 Surface of a foam molded body corresponding to the plan view region F3
1 Multi-nozzle mold
1a Front end surface
2 Rotary shaft
3 Driving member
4 Cooling member
5 Rotary blade
11 Outlet portion
41 Cooling drum
41a Front portion
41b Peripheral wall portion
41c Supply port
41d Supply pipe
41e Discharge port
42 Cooling water
60' Foam particle (foam particles before fusion; pre-foam particles)
60 Foam particle (after fusion)
100 Bead foam molded body
D1 Thickness direction (opening and closing direction of the mold)
M Mold
Ma Female mold part
Mb Male mold part
Mv Molding cavity

**Claims**

1. An aromatic polyester-based resin foam molded body for a core of a composite structural member,

   the foam molded body comprising 90% by mass or more of polyethylene terephthalate,
   the foam molded body having a surface crystallinity of 20% to 30% and a peak temperature of a heat history of 125°C to 200°C, measured by a differential scanning calorimeter (DSC),
   the foam molded body having a surface with a maximum peak height (Sp) of 0.25 mm or less, and

foam particles constituting the foam molded body having a fusion rate of 60% or more.

2. A composite structural member comprising a foam molded body as in claim 1 as a core.

3. A method for producing a foam molded body, the method producing an aromatic polyester-based resin foam molded body using a mold provided with a molding cavity for forming the foam molded body,

the mold being provided with a pair of mold parts disposed to face each other and configured to open and close the molding cavity by the pair of mold parts approaching and separating and to change a capacity of the molding cavity,
the method comprising:

a first step of accommodating foam particles of an aromatic polyester-based resin in the molding cavity of the mold and closing the mold; and
a second step of heating the mold after the first step so as to foam and thermally fuse the foam particles accommodated in the molding cavity, thereby forming the foam molded body,
the mold having a vent hole that communicates with the molding cavity on a side surface,
gas in the molding cavity being allowed to be discharged to an outside of the mold through the vent hole of the mold during heating in the second step,
the foam molded body containing 90% by mass or more of polyethylene terephthalate,
the foam molded body having a surface crystallinity of 20% to 30% and a peak temperature of a heat history of 125°C to 200°C, measured by a differential scanning calorimeter (DSC),
the foam molded body having a surface with a maximum peak height (Sp) of 0.25 mm or less, and
foam particles constituting the foam molded body having a fusion rate of 60% or more.

4. The method for producing a foam molded body according to claim 3, wherein the foam particles are pressed by closing the mold in the first step, and the pressed foam particles are foamed and thermally fused in the second step.

[Fig. 1]

(A)

(B)

[Fig. 2]

[Fig. 3]

[Fig. 4]

[Fig. 5]

[Fig.6]

[Fig. 7]

[Fig. 8]

[Fig. 9]

[Fig. 10]

[Fig. 11]

EP 4 786 135 A1

[Fig. 12]

[Fig. 13]

[Fig. 14]

[Fig. 15]

## INTERNATIONAL SEARCH REPORT

| International application No. |
|---|
| **PCT/JP2024/034265** |

**A. CLASSIFICATION OF SUBJECT MATTER**

*B29C 44/44*(2006.01)i; *B29C 44/00*(2006.01)i; *C08J 9/228*(2006.01)i
FI:  B29C44/44; C08J9/228 CFD; B29C44/00 C

According to International Patent Classification (IPC) or to both national classification and IPC

**B. FIELDS SEARCHED**

Minimum documentation searched (classification system followed by classification symbols)

B29C44/44; B29C44/00; C08J9/228; B29C33/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-227483 A (SEKISUI PLASTICS CO., LTD.) 07 November 2013 (2013-11-07) paragraphs [0015], [0033], [0053], [0070], [0075], [0095], examples, table 1 | 1, 2 |
| A | | 3, 4 |
| A | JP 2002-53693 A (JSP CORP.) 19 February 2002 (2002-02-19) claims, examples | 1-4 |
| A | JP 2012-206330 A (SEKISUI PLASTICS CO., LTD.) 25 October 2012 (2012-10-25) entire text, all drawings | 1-4 |
| A | JP 2021-160179 A (SEKISUI PLASTICS CO., LTD.) 11 October 2021 (2021-10-11) paragraph [0053], examples, fig. 1-2b | 3-4 |
| A | US 2021/0206036 A1 (KURTZ GMBH) 08 July 2021 (2021-07-08) entire text, all drawings | 1-4 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2024** | **03 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/034265**

| Patent document cited in search report | Publication date (day/month/year) | Patent family member(s) | Publication date (day/month/year) |
|---|---|---|---|
| JP 2013-227483 A | 07 November 2013 | (Family: none) | |
| JP 2002-53693 A | 19 February 2002 | (Family: none) | |
| JP 2012-206330 A | 25 October 2012 | (Family: none) | |
| JP 2021-160179 A | 11 October 2021 | (Family: none) | |
| US 2021/0206036 A1 | 08 July 2021 | WO 2017/125410 A1<br>EP 3405322 A1<br>CN 108472843 A<br>KR 10-2018-0102636 A | |

Form PCT/ISA/210 (patent family annex) (July 2022)

**EP 4 786 135 A1**

## REFERENCES CITED IN THE DESCRIPTION

**Patent documents cited in the description**

- JP 2014080022 A
- JP 2016069460 A